# EUROPÄISCHE PATENTSCHRIFT

(11) **EP 4 461 610 B1**
(45) Veröffentlichungstag und Bekanntmachung des Hinweises auf die Patenterteilung: **28.05.2025**
(21) Anmeldenummer: 24164046.5
(22) Anmeldetag: 18.03.2024
(51) Int. Cl.: B60T 17/08

(54) **FEDERSPEICHER-BREMSAKTUATOR**
SPRING BRAKE ACTUATOR
ACTIONNEUR DE FREIN À RESSORT

(30) Priorität: 28.04.2023 DE 202023102323 U
(43) Veröffentlichungstag der Anmeldung: 13.11.2024
(73) Patentinhaber: Hanning & Kahl GmbH & Co. KG, 33813 Oerlinghausen (DE)
(72) Erfinder: Suren, Björn Christian, 33129 Delbrück (DE)
(74) Vertreter: Ter Meer Steinmeister & Partner

(56) Entgegenhaltungen:
- DE-U1- 29 708 587
- US-B1- 6 722 477
- US-B2- 6 702 072

## Beschreibung

Die Erfindung betrifft einen Federspeicher-Bremsaktuator mit einer an ein Bremsorgan einer Bremse koppelbaren Druckstange, einem Kraftspeicher, der dazu eingerichtet ist, über einen Kopplungsmechanismus eine Bremskraft auf die Druckstange auszuüben, einem Antrieb, der dazu eingerichtet ist, die Druckstange entgegen der Kraft des Kraftspeichers in einer Bremslösestellung zu halten, und einer Hilfslösevorrichtung, mit der sich die Übertragung der Bremskraft von dem Kraftspeicher auf die Druckstange unabhängig von dem Antrieb blockieren lässt.

Damit bei einem Schienenfahrzeug die Bremsen auch bei einem völligen Ausfall der Energieversorgung funktionsfähig bleiben, sind die Radbremsen üblicherweise als Federspeicherbremsen ausgebildet, bei denen die Bremskraft durch einen Kraftspeicher bereitgestellt wird, der beispielsweise durch eine Tellerfedersäule gebildet wird. Ein hydraulischer Antrieb dient dazu, die Bremse in der Lösestellung zu halten. Ein Bremsvorgang kann dann einfach dadurch ausgelöst werden, dass der Antrieb deaktiviert wird.

Im Fall eines Ausfalls der Energieversorgung ist der Antrieb wirkungslos, so dass unvermeidlich die Bremsen aktiviert werden. Da jedoch in einer solchen Situation das Erfordernis bestehen kann, die Bremsen zu lösen und das Fahrzeug zu bewegen, weisen solche Federspeicherbremsen eine Hilfslösevorrichtung auf, die es ermöglicht, die Bremse von Hand zu lösen.

In DE 29 70 8587 U1 wird eine Federspeicherbremse beschrieben, bei der die Hilfslösevorrichtung durch einen Hilfskolben gebildet wird, der Teil des hydraulischen Antriebs ist und über eine handbetätigte Pumpe mit Druck beaufschlagt werden kann, um die Bremse entgegen der Kraft des Tellerfederpakets zu lösen.

Das Kraftübertragungsorgan, mit dem die Bremskraft auf die Bremsbacken oder einen Schwimmsattel einer Bremse übertragen wird, wird üblicherweise durch eine Druckstange gebildet, die entweder direkt oder über einen Umlenkhebel auf den Bremssattel wirkt. Zumeist enthält der Kraftübertragungsmechanismus auch einen sogenannten Nachsteller, mit dem automatisch das Lüftspiel der Bremse nachgestellt werden kann, wenn sich dieses Spiel aufgrund von Verschleiß an den Bremsbelägen geändert hat. Bei einem solchen Nachsteller wird üblicherweise über einen Spindelmechanismus eine Drehbewegung in eine axiale Bewegung umgesetzt. Dieser Mechanismus kann zugleich eine Hilfslösevorrichtung bilden, mit der ein von Hand auf die Spindel ausgeübtes Drehmoment mit hohem Verstärkungsfaktor in eine axiale Bewegung umgesetzt werden kann, um die Kraft des Federspeichers aufzuheben. Nachteilig ist jedoch, dass die Bedienung einer solchen Hilfslösevorrichtung relativ umständlich und zeitraubend ist und dass nach einem Hilfslösevorgang das Lüftspiel wieder neu eingestellt werden muss.

Bei Bremsen, bei denen die Druckstange über einen Umlenkhebel auf den Bremssattel wirkt, sind auch Hilfslösevorrichtungen denkbar, mit denen am Umlenkhebel der Kraftfluss vom Federspeicher zur Bremse unterbrochen wird.

Aufgabe der Erfindung ist es, einen Federspeicher-Bremsaktuator mit einer einfach zu bedienenden Hilfslösevorrichtung zu schaffen, die auch bei Kopplungsmechanismen ohne Umlenkhebel eingesetzt werden kann.

Diese Aufgabe wird erfindungsgemäß dadurch gelöst, dass der Kopplungsmechanismus zwei Kopplungsglieder aufweist, die über eine Klauenkupplung miteinander in Eingriff stehen, und dass die Hilfslösevorrichtung ein Stellorgan aufweist, das dazu eingerichtet ist, die Klauen der Klauenkupplung in einer Bewegungsrichtung quer zur Kraftübertragungsrichtung in eine Nichteingriffsstellung zu bringen.

Erfindungsgemäß wird der Kraftfluss zwischen dem Kraftspeicher und dem Bremsorgan einfach dadurch unterbrochen, dass die Klauenkupplung gelöst wird. Da die Lösebewegung der Klauen rechtwinklig zur Kraftübertragungsrichtung ist, braucht bei dem Lösevorgang die Kraft des Kraftspeichers nicht überwunden zu werden, so dass die Bremse mit geringem Kraftaufwand manuell gelöst werden kann. Um nach einem Notlösevorgang die Klauenkupplung wieder in Eingriff zu bringen, wenn der Antrieb des Bremsaktuators wieder funktionsbereit ist, genügt es, den Antrieb einmal zu aktivieren um das Federpaket des Kraftspeichers so weit zu komprimieren, dass die Klauenkupplung selbsttätig wieder einrastet.

Vorteilhafte Ausgestaltungen und Weiterbildungen der Erfindung sind in den Unteransprüchen angegeben.

Im folgenden wird ein Ausführungsbeispiel anhand der Zeichnung näher erläutert.

Es zeigen:
- Fig. 1: einen axialen Schnitt durch einen erfindungsgemäßen Bremsaktuator in einer Bremslösestellung;
- Fig. 2: den Bremsaktuator nach Fig. 1 in einer Bremsstellung;
- Fig. 3: den Bremsaktuator in einem Zustand, in dem die Hilfslösevorrichtung betätigt ist;
- Fig. 4: den Bremsaktuator in einem Zustand, in dem die Hilfslösevorrichtung unbetätigt ist aber die Bremse noch nicht wieder betriebsbereit ist; und
- Fig. 5: den Bremsaktuator im erneut betriebsbereiten Zustand.

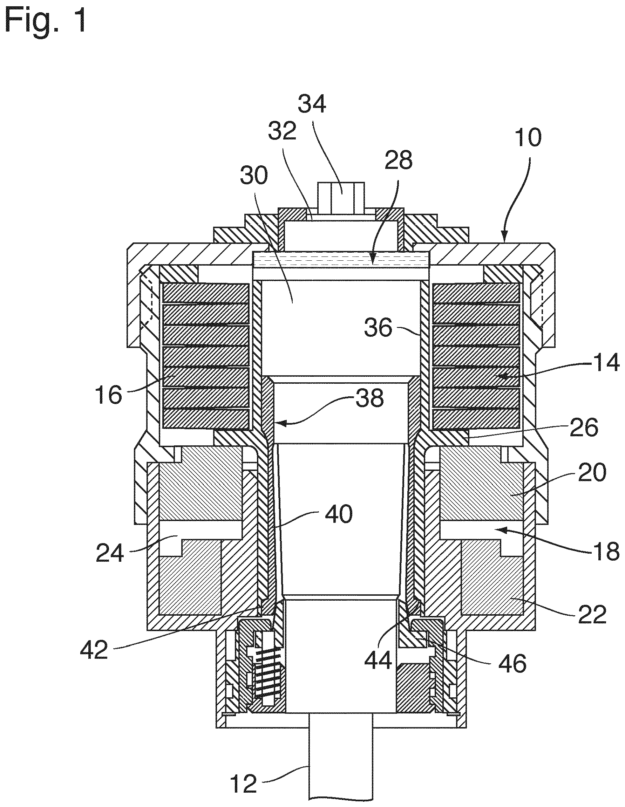

Der in Fig. 1 gezeigte Bremsaktuator weist ein aus mehreren Teilen zusammengesetztes Gehäuse 10 auf, aus dem am in Fig. 1 unteren Ende ein Kraftübertragungsorgan in der Form einer Druckstange 12 austritt, die entweder direkt oder indirekt über einen Umlenkhebel mit einem Bremsorgan einer Bremse eines Schienenfahrzeugs koppelbar ist. Das Gehäuse 10 nimmt im oberen Teil einen Kraftspeicher 14 auf, der durch eine Säule oder ein Paket übereinandergestapelter Tellerfeder 16 gebildet wird. Im unteren Teil nimmt das Gehäuse 10 einen hydraulischen Antrieb 18 auf, der eine durch einen Hauptkolben 20 und einen Hilfskolben 22 begrenzte Haupt-Druckkammer 24 aufweist.

In dem in Fig. 1 gezeigten Zustand ist die Haupt-Druckkammer 24 mit Druck beaufschlagt, so dass der Hauptkolben 20 aufwärts gegen einen Federteller 26 gedrückt wird, an dem sich der Kraftspeicher 14 mit seinem unteren Ende abstützt. Das Tellerfederpaket des Kraftspeichers 14 wird dadurch zwischen dem Federteller 26 und einer oberen Wand des Gehäuses 10 komprimiert. Der Federteller 26 ist zugleich Teil eines Kopplungsmechanismus, mit dem die Kraft des Kraftspeichers 14 auf die Druckstange 12 übertragen werden kann. Ein weiterer Teil des Kopplungsmechanismus ist ein Nachsteller 28, der zum automatischen Nachstellen des Lüftspiels der Bremse dient und von dem hier nur ein im wesentlichen zylindrisches, sich jedoch nach unten verjüngendes Nachstellergehäuse 30 und ein aus dem Nachstellergehäuse herausragendes Ende einer Spindel 32 zu sehen ist, die einen aus dem Gehäuse 10 herausragenden Sechskantkopf 34 trägt. Der innere Aufbau und die Funktionsweise des Nachstellers 28 sind als solche bekannt und werden deshalb hier nicht näher beschrieben.

Das Nachstellergehäuse 30 ist von einer Hülse 36 umgeben, die in einem Stück mit dem Federteller 26 ausgebildet ist und sowohl nach oben als auch nach unten axial vom inneren Umfangsrand des Federtellers 26 vorspringt. Zu dem Kopplungsmechanismus gehört neben dem Federteller 26 und dem Nachsteller 28 auch eine Klauenkupplung 38, die das Nachstellergehäuse 30 ringförmig umgibt und eine lösbare formschlüssige Verbindung zwischen dem Federteller 26 und dem Nachstellergehäuse 30 herstellt. Dazu ist ein ringförmiger oberer Teil der Klauenkupplung 38 starr mit dem Nachstellergehäuse 30 verbunden, während ein unterer Teil der Klauenkupplung durch einen Kranz von elastischen Fingern 40 gebildet wird, die axial von dem ringförmigen oberen Teil ausgehen und jeweils am unteren Ende eine nach außen gekröpfte Klaue 42 tragen. In dem in Fig 1 gezeigten Zustand greifen diese Klauen unter einen am unteren Ende der Hülse 36 gebildeten Absatz 44.

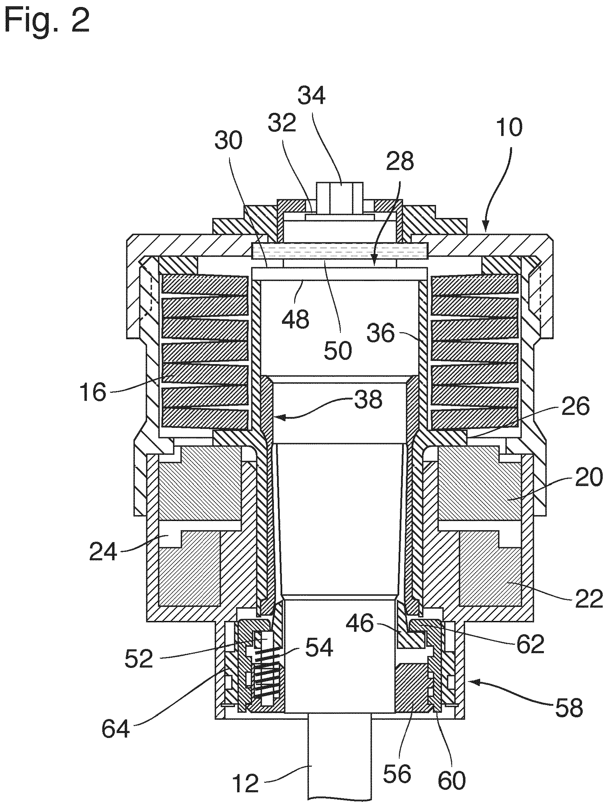

Wenn die Bremse betätigt werden soll, so wird die Haupt-Druckkammer 24 drucklos geschaltet, so dass sich der Hauptkolben 20 und der Federteller 26 unter der Kraft der Tellerfedern 16 abwärts in die in Fig. 2 gezeigte Position bewegen. Die Kraft der Tellerfedern 16 wirkt über den Absatz 44 auf die Klauen 42, so dass auch die Klauenkupplung 38 und damit auch der Nachsteller 28 und die Druckstange 12 nach unten gezogen werden. Durch diese axiale Bewegung der Druckstange 12 wird die Bremse betätigt. Die Kraft des Kraftspeichers 14 wird über den Federteller 26, die Klauenkupplung 38, den Nachsteller 28 und die Druckstange 12 auf das Bremsorgan, beispielsweise einen Bremsbelag, übertragen, so dass der Bremsbelag fest gegen eine Bremsscheibe angedrückt wird und somit eine hohe Reibungsbremskraft erzeugt wird. Die Klauen 42 und die freien Enden der Finger 40 werden dabei durch einen von unten in den Kranz der Finger 40 eintretenden Spreizkonus 46 in einer radial nach außen ausgestellten Position gehalten, so dass die Klauen 42 nicht von dem Absatz 44 abrutschen.

In Fig. 2 ist zu erkennen, dass sich im Vergleich zu Fig. 1 der Abstand zwischen dem Hauptkolben 20 und dem Hilfskolben 22 verringert hat, da sich der Hauptkolben 20 und der Federteller 26 abwärts bewegt haben. Weiterhin erkennt man, dass sich aufgrund der Abwärtsbewegung des Nachstellers 28 ein Spalt zwischen einem Flansch 48 am oberen Ende des Nachstellergehäuses 30 und einem fest im Gehäuse 10 gehaltenen Abschlusselement 50 gebildet hat.

Wenn die Bremse wieder gelöst werden soll, so wird mit einer elektrisch angetriebenen Pumpe Hydraulikflüssigkeit in die Haupt-Druckkammer 24 gepumpt, so dass der Hauptkolben 20 entgegen der Kraft der Tellerfeder 16 wieder nach oben gedrückt wird. Das hat zur Folge, dass der Absatz 44 keine axiale Kraft mehr auf die Klauen 42 ausübt und somit die Druckstange 12 und das Bremsorgan der Bremse entlastet werden. Da der Federteller 26 durch den Hauptkolben 20 nach oben gedrückt wird, stößt die Hülse 36 mit ihrem oberen Rand an dem Flansch 48 des Nachstellergehäuses an, so dass auch der Nachsteller 28 und die Druckstange 12 wieder in die in Fig. 1 gezeigte Position zurückgestellt werden.

Der Spreizkonus 46 ist auf Stiften 52 axial verschiebbar geführt und wird durch Federn 54, die die Stifte 52 umgeben, axial gegen die Finger 40 der Klauenkupplung 38 vorgespannt, so dass die Klauen 42 an dem Absatz 44 in Eingriff gehalten werden. Die unteren Enden der Federn 54 stützen sich an einem Ring 56 ab, der starr mit dem verjüngten unteren Ende des Nachstellergehäuses 30 verbunden ist.

Wenn bei einem Ausfall der Energieversorgung oder bei einem Ausfall der Hydraulikpumpe die Haupt-Druckkammer 24 nicht mehr mit Druck beaufschlagt werden kann, so würde der Bremsaktuator in dem in Fig. 2 gezeigten Zustand bleiben, und die Bremse wäre ständig aktiv, so dass das Fahrzeug nicht bewegt werden könnte. Damit auch in einem solchen Fall die Bremse gelöst werden kann, gibt es verschiedene Möglichkeiten, die Bremse von Hand zu lösen. Eine dieser Möglichkeiten besteht darin, dass mit einer von Hand betätigten Pumpe die Unterseite des Hilfskolbens 22 mit Druck beaufschlagt wird, so dass der Hilfskolben 22 gegen den Hauptkolben 20 verschoben wird und dann den Federteller 26 entgegen der Kraft der Tellerfedern 16 nach oben drückt. Dieser Vorgang ist jedoch zeitraubend, da mit der handbetätigten Pumpe ein relativ hoher hydraulischer Druck aufgebaut werden muss. Eine andere Möglichkeit besteht darin, mit Hilfe eines Werkzeugs den Sechskantkopf 34 und damit die Spindel 32 zu drehen und dadurch die axiale Position der Druckstange 12 relativ zum Nachstellergehäuse 30 zu verstellen, so dass zwar der Federteller 26 und das Nachstellergehäuse 30 in der abgesenkten Position verbleiben, die Druckstange 12 jedoch nach oben gezogen wird und somit die Bremse gelöst wird. Diese Möglichkeit hat jedoch den Nachteil, dass nach einem solchen Lösevorgang das Lüftspiel der Bremse umständlich wieder neu eingestellt werden muss, beispielsweise durch mehrmaliges Betätigen und Lösen der Bremse mit Hilfe des Hauptkolbens 20.

Erfindungsgemäß weist der hier gezeigte Bremsaktuator eine zusätzliche Hilfslösevorrichtung 58 auf, deren Aufbau nun anhand der Fig. 2 erläutert werden soll.

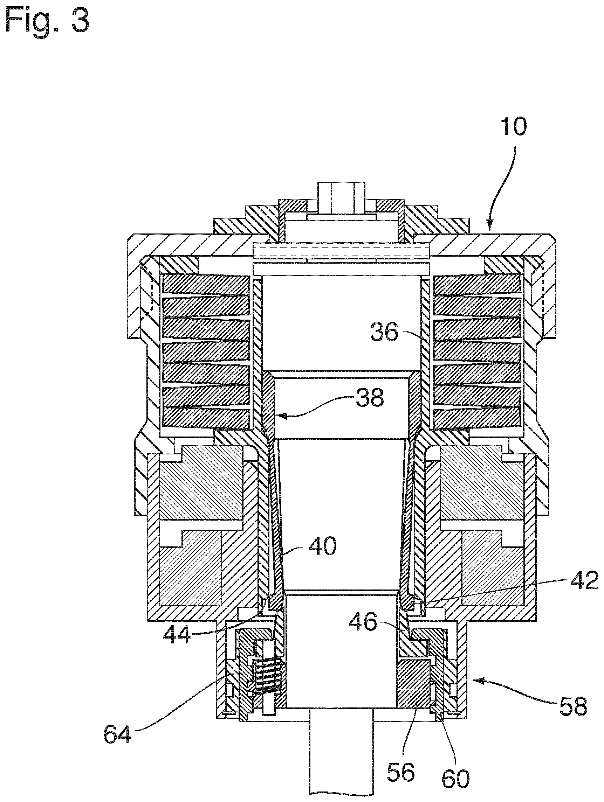

Der Ring 56 steht an seinem äußeren Umfang über ein Steilgewinde mit einer Buchse 60 in Eingriff, die an ihren oberen Ende mit einem Flansch 62 einen Flansch des Spreizkonus 46 übergreift. Eine Seiltrommel 64 ist drehbar und axialfest im unteren Teil des Gehäuses 10 gelagert und steht so mit der Buchse 60 in Eingriff, dass die Buchse 60 axial verschiebbar ist, sich jedoch bei einer Drehung der Seiltrommel mit dieser Seiltrommel mitdreht. Auf die Seiltrommel ist ein hier nicht gezeigtes Zugseil aufgewickelt. Wenn von Hand, beispielsweise über einen Hebel, ein Zug auf dieses Zugseil ausgeübt wird, so werden die Seiltrommel 64 und die Buchse 60 in Drehung versetzt. Aufgrund des Steilgewindes bewegt sich dabei die Buchse 60 relativ zu dem Ring 56 nach unten, so dass der Spreizkonus 46 entgegen der Kraft der Federn 54 nach unten gezogen wird. Dadurch können die Klauen 42 nach innen schwenken und von dem Absatz 44 der Hülse 36 frei kommen, wie in Fig. 3 gezeigt ist. Die Einwärts-Schwenkbewegung der Finger 40 kann dadurch bewirkt werden, dass diese Finger elastisch in die radial innere Position vorgespannt sind und/oder dadurch, dass der Absatz 44 und die Klauen 42 etwas angeschrägt sind.

In dem in Fig 3 gezeigten Zustand ist der Kraftfluss zwischen dem Federteller 26 und der Klauenkupplung 38 unterbrochen, so dass der Nachsteller 28 und die Druckstange 12 nicht mehr in der Bremsbetätigungsstellung gehalten werden und somit keine Kraft mehr auf das Bremsorgan ausüben. Aufgrund einer gewissen Eigenelastizität des Bremsorgans werden sich die Druckstange 12 und der Nachsteller 28 ein Stück weit in Richtung auf die Bremslösestellung gemäß Fig. 1 bewegen.

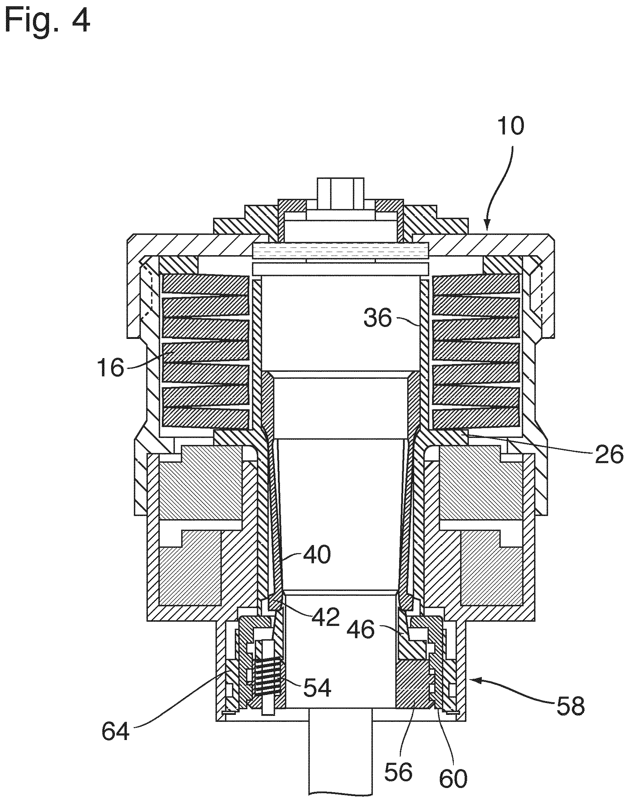

Wenn über den Seilzug kein Zug mehr auf die Seiltrommel 64 ausgeübt wird, kehrt diese unter der Wirkung einer nicht gezeigten Rückstellfeder in ihre Ausgangsstellung zurück, so dass die Buchse 60 wieder nach oben in die in Fig. 4 gezeigte Position geschoben wird. Der Spreizkonus 46 verbleibt jedoch noch in der abgesenkten Position, da er mit seinem oberen Ende an den Klauen 42 anstößt und diese durch die nach wie vor in der abgesenkten Stellung gehaltene Hülse 36 daran gehindert werden, wieder nach außen zu schwenken.

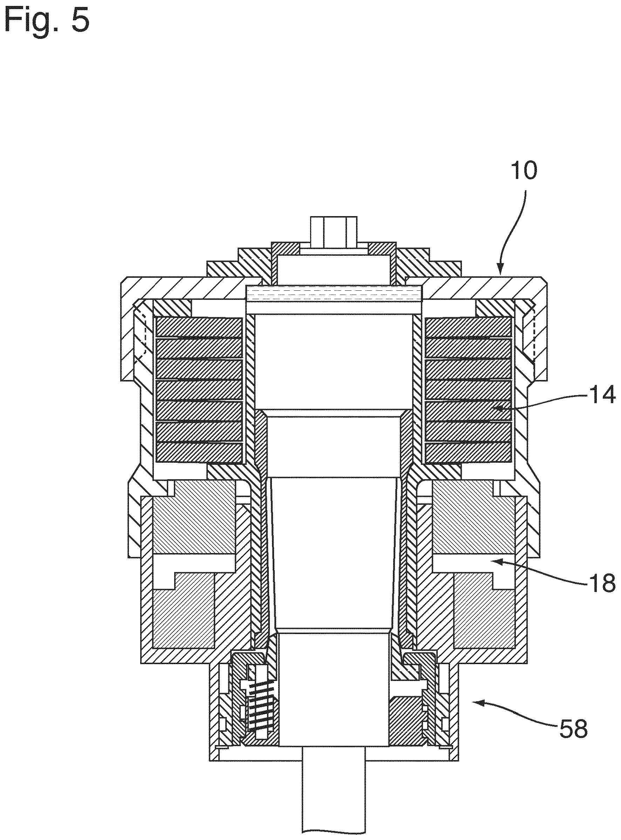

Wenn der Antrieb 18 wieder betriebsbereit ist, kann der Hauptkolben 20 hydraulisch wieder in die angehobene Position bewegt werden, wie in Fig, 5 gezeigt ist. Dabei werden die Tellerfedern 16 komprimiert, und der Federteller 26 und die Hülse 36 werden so weit angehoben, dass der Spreizkonus 46 unter der Kraft der Federn 54 auf die Finger 40 aufläuft und die Klauen 42 wieder nach außen drückt, so dass sie an dem Absatz 44 einrasten. Da das Lüftspiel der Bremse bei den in Fig. 3 bis 5 beschriebenen Vorgängen nicht verstellt wurde, ist die Bremse dann unmittelbar wieder betriebsbereit.

## Patentansprüche

1. Federspeicher-Bremsaktuator mit einer an ein Bremsorgan an einer Bremse koppelbaren Druckstange (12), einem Kraftspeicher (14), der dazu eingerichtet ist, über einen Kopplungsmechanismus (26, 38, 28) eine Bremskraft auf die Druckstange (12) auszuüben, einem Antrieb (18), der dazu eingerichtet ist, die Druckstange (12) entgegen der Kraft des Kraftspeichers (14) in einer Bremslösestellung zu halten, und einer Hilfslösevorrichtung (58), mit der sich die Übertragung der Bremskraft von dem Kraftspeicher (14) auf die Druckstange (12) unabhängig von dem Antrieb (18) blockieren lässt, **dadurch gekennzeichnet, dass** der Kopplungsmechanismus zwei Kopplungsglieder (26, 28) aufweist, die über eine Klauenkupplung (38) miteinander in Eingriff stehen, und dass die Hilfslösevorrichtung (58) ein Stellorgan (60) aufweist, das dazu eingerichtet ist, die Klauen (42) der Klauenkupplung (38) in einer Bewegungsrichtung quer zur Kraftübertragungsrichtung in eine Nichteingriffsstellung zu bringen.

2. Bremsaktuator nach Anspruch 1, bei dem der Kraftspeicher (14) ein Federsystem aufweist und eines der Kopplungsglieder ein Federteller (26) ist.

3. Bremsaktuator nach Anspruch 2, bei dem ein anderes der Kopplungsglieder ein Nachsteller (28) zur Einstellung des Lüftspiels der Bremse ist.

4. Bremsaktuator nach Anspruch 3, bei dem die Klauenkupplung (38) einen ringförmigen Teil aufweist, der starr mit einem Nachstellergehäuse (30) des Nachstellers (28) verbunden ist und von dem axial mehrere elastische Finger (40) abgehen, die jeweils am freien Ende eine Klaue (42) tragen, und bei dem der Federteller (26) starr mit einer Hülse (36) verbunden ist, die das Nachstellergehäuse (30) und die Klauenkupplung (38) umgibt und am inneren Umfang einen Absatz (44) bildet, an dem die Klauen (42) einrasten können.

5. Bremsaktuator nach Anspruch 4, bei dem die Hilfslösevorrichtung (58) einen Spreizkonus (46) aufweist, der im betriebsbereiten Zustand des Bremsaktuators die Klauen (42) an dem Absatz (44) in Eingriff hält und der durch das Stellorgan (60) relativ zu den Klauen (42) axial zurückziehbar ist, so dass er die Klauen freigibt.

6. Bremsaktuator nach Anspruch 5, bei dem die Hilfslösevorrichtung (58) eine Seiltrommel (64) für ein Zugseil aufweist, die über ein Getriebe mit dem Stellorgan (60) verbunden ist.

7. Bremsaktuator nach Anspruch 6, bei dem das Stellorgan eine Buchse (60) ist, die über ein Steilgewinde mit einem starr am Nachstellergehäuse (30) gehaltenen Ring (56) in Eingriff steht und einen Flansch des Spreizkonus (46) mit einem Flansch (62) übergreift und die axial verschiebbar und drehfest mit der Seiltrommel (64) verbunden ist.

## Claims

1. A spring-loaded brake actuator comprising a push rod (12) that can be coupled to a braking element of a brake, an energy accumulator (14) which is designed to apply a braking force onto the push rod (12) via a coupling mechanism (26, 38, 28), a drive (18), which is designed to hold the push rod (12) in a brake release position against the force of the energy accumulator (14), and an auxiliary release device (58), with which the transmission of the braking force from the energy accumulator (14) to the push rod (12) can be blocked independently of the drive (18), **characterized in that** the coupling mechanism has two coupling members (26, 28) which are in engagement with one another via a claw clutch (38), and **in that** the auxiliary release device (58) has an actuating element (60) which is designed to bring the claws (42) of the claw clutch (38) into a non-engaged position in a direction of movement transverse to the force transmission direction.

2. The brake actuator according to claim 1, wherein the energy accumulator (14) has a spring system, and one of the coupling members is a spring plate (26).

3. The brake actuator according to claim 2, wherein another of the coupling members is an adjuster (28) for adjusting the clearance of the brake.

4. The brake actuator according to claim 3, wherein the claw clutch (38) has an annular part which is rigidly connected to an adjuster housing (30) of the adjuster (28) and from which a plurality of elastic fingers (40) extend axially, each carrying a claw (42) at the free end, and wherein the spring plate (26) is rigidly connected to a sleeve (36) which surrounds the adjuster housing (30) and the claw clutch (38) and has, on its inner circumference, a shoulder (44), at which the claws (42) can snap into place.

5. The brake actuator according to claim 4, wherein the auxiliary release device (58) has an expansion cone (46) which holds the claws (42) in engagement on the shoulder (44) in the operational state of the brake actuator and which is retractable by the actuating element (60) in axial direction relative to the claws (42) so that it releases the claws.

6. The brake actuator according to claim 5, wherein the auxiliary release device (58) has a cable drum (64) for a pull cable, the drum being connected to the actuating element (60) via a gear transmission.

7. The brake actuator according to claim 6, wherein the actuating element is a bushing (60) which engages via a steep thread with a ring (56) held rigidly on the adjuster housing (30) and a flange of the expansion cone (46) with a flange ( 62) and which is axially displaceable and non-rotatably connected to the cable drum (64).

## Revendications

1. Actionneur de frein à ressort comportant une tige de poussée (12) pouvant être accouplée à un organe de freinage sur un frein, un accumulateur d'énergie (14) configuré pour appliquer une force de freinage sur la tige de poussée (12) par l'intermédiaire d'un mécanisme d'accouplement (26), un entraînement (18) configuré pour maintenir la tige de poussée (12) dans une position de desserrage du frein à l'encontre de la force de l'accumulateur d'énergie (14), et un dispositif de desserrage auxiliaire (58) qui permet de bloquer la transmission de la force de freinage de l'accumulateur d'énergie (14) à la tige de poussée (12) indépendamment de l'entraînement (18), **caractérisé en ce que** le mécanisme d'accouplement comporte deux éléments d'accouplement (26, 28) qui sont en prise l'un avec l'autre par l'intermédiaire d'un accouplement à griffes (38), et **en ce que** le dispositif de desserrage auxiliaire (58) comporte un organe de réglage (60) configuré pour amener les griffes (42) de l'accouplement à griffes (38) dans une position hors de prise dans une direction de déplacement transversale à la direction de transmission de force.

2. Actionneur de frein selon la revendication 1, dans lequel l'accumulateur d'énergie (14) comporte un système à ressort et l'un des éléments d'accouplement est une coupelle de ressort (26).

3. Actionneur de frein selon la revendication 2, dans lequel un autre des éléments d'accouplement est un élément de rattrapage (28) destiné à régler le jeu du frein.

4. Actionneur de frein selon la revendication 3, dans lequel l'accouplement à griffes (38) comporte une partie annulaire qui est reliée de façon rigide à un boîtier d'élément de rattrapage (30) de l'élément de rattrapage (28) et à partir de laquelle plusieurs doigts élastiques (44) font axialement saillie, lesquels doigts portant chacun une griffe (42) sur l'extrémité libre, et dans lequel la coupelle de ressort (26) est reliée de façon rigide à une douille (36) qui entoure le boîtier d'élément de rattrapage (30) et l'accouplement à griffes (38), et forme un épaulement (44) sur la circonférence intérieure, sur lequel les griffes peuvent s'enclencher.

5. Actionneur de frein selon la revendication 4, dans lequel le dispositif de desserrage auxiliaire (58) comporte un cône d'expansion (46) qui maintient les griffes (42) en prise sur l'épaulement (44) lorsque l'actionneur de frein est dans l'état opérationnel, et peut être rétracté axialement par l'organe de réglage (60) par rapport aux griffes (42), de telle sorte qu'il libère les griffes.

6. Actionneur de frein selon la revendication 5, dans lequel le dispositif de desserrage auxiliaire (58) comporte un tambour de câble (64) pour un câble de traction, qui est relié à l'organe de réglage (60) par l'intermédiaire d'un bloc d'engrenages.

7. Actionneur de frein selon la revendication 6, dans lequel l'organe de réglage est un manchon (60) qui est en prise avec une bague (56) maintenue de façon rigide sur le boîtier d'élément de rattrapage (30) par l'intermédiaire d'un filetage à pas rapide et recouvre un rebord du cône d'expansion (46) avec un rebord (62), et qui peut être déplacé axialement et est relié au tambour de câble (64) de manière bloquée en rotation.
